(19) Europäisches Patentamt

European Patent Office

Office européen des brevets

(11) EP 0 859 073 B1

(12) EUROPEAN PATENT SPECIFICATION

(45) Date of publication and mention of the grant of the patent:
19.11.2003 Bulletin 2003/47

(51) Int Cl.[7]: D01F 8/06

(21) Application number: 98106269.8

(22) Date of filing: 06.04.1994

(54) **Bicomponent fibres with at least one elastic component, fabrics and articles fabricated therefrom**

Bikomponentfasern mit zumindest eine elastische Komponente, Gewebe und daraus hergestellte Artikel

Fibres bicomposants avec au moins un composant élastique, tissus et articles les utilisant

(84) Designated Contracting States:
BE CH DE DK ES FR GB IT LI NL SE

(30) Priority: 27.04.1993 US 53580

(43) Date of publication of application:
19.08.1998 Bulletin 1998/34

(62) Document number(s) of the earlier application(s) in accordance with Art. 76 EPC:
94913373.0 / 0 696 328

(73) Proprietor: THE DOW CHEMICAL COMPANY
Midland, Michigan 48674 (US)

(72) Inventors:
• Maugans, Rexford A.
Texas 77566 (US)
• Knickerbocker, Edward N.
Texas 77566 (US)
• Knight, George W.
Oklahoma 73034 (US)

(74) Representative:
Böhm, Brigitte, Dipl.-Chem. Dr. et al
Weickmann & Weickmann
Patentanwälte
Kopernikusstrasse 9
81679 Munich (DE)

(56) References cited:
WO-A-93/21242          WO-A-94/12699
US-A- 4 584 347

• I.I.P.E. Vointseva & A.N. Nesmeyanov: "Interpolymers" in J.C. Salamone: "Polymeric Materials Encyclopedia", vol. 5: H-L; CRC Press, Boca Raton (US); p. 3315 (1996)

**Description**

This invention relates to bicomponent fibers, fabrics and articles fabricated therefrom (e.g., disposable incontinence garments or diapers). The fibers and fabrics comprise at least one homogeneously branched linear ethylene polymer having specific properties.

Fiber is typically classified according to its diameter. Monofilament fiber is generally defined as having an individual fiber diameter greater than about 15 denier ( 1.7 tex), usually greater than about 30 denier (3.3 tex) per filament. Fine denier fiber generally refers to a fiber having a diameter less than about 15 denier ( 1.7 tex) per filament. Microdenier fiber is generally defined as fiber having less than 100 μm diameter. The fiber can also be classified by the process by which it is made, such as monofilament, continuous wound fine filament, staple or short cut fiber, spun bond, and melt blown fiber.

A variety of fibers and fabrics have been made from thermoplastics, such as polypropylene, highly branched low density polyethylene (LDPE) made typically in a high pressure polymerization process, linear heterogeneously branched polyethylene (e.g., linear low density polyethylene made using Ziegler catalysis), blends of polypropylene and linear heterogeneously branched polyethylene, blends of linear heterogeneously branched polyethylene, and ethylene/vinyl alcohol copolymers.

Of the various polymers known to be extrudable into fiber, highly branched LDPE has not been successfully melt spun into fine denier fiber. Linear heterogeneously branched polyethylene has been made into monofilament, as described in USP 4,076,698 (Anderson et al.). Linear heterogeneously branched polyethylene has also been successfully made into fine denier fiber, as disclosed in USP 4,644,045 (Fowells), USP 4,830,907 (Sawyer et al.), USP 4,909,975 (Sawyer et al.) and in USP 4,578,414 (Sawyer et al.). Blends of such heterogeneously branched polyethylene have also been successfully made into fine denier fiber and fabrics, as disclosed in USP 4,842,922 (Krupp et al.), USP 4,990,204 (Krupp et al.) and USP 5,112,686 (Krupp et al.). USP 5,068,141 (Kubo et al.) also discloses making nonwoven fabrics from continuous heat bonded filaments of certain heterogeneously branched LLDPE having specified heats of fusion.

However, fibers made from all of these types of saturated olefinic polymers are not "elastic" as that term is defined below without incorporating additives or elastomers, thus limiting their use in elastic applications. One attempt to alleviate this problem by incorporating additives into the polymer prior to melt spinning is disclosed in USP 4,663,220 (Wisneski et al.). Wisneski et al. disclose fibrous elastomeric webs comprising at least about 10 percent of a block copolymer and a polyolefin. The resultant webs are said to have elastomeric properties.

USP 4,425,393 (Benedyk) discloses monofilament fiber made from polymeric material having an elastic modulus from 2,000 to 10,000 psi (13.8 MPa to 68.9 MPa). The polymeric material includes plasticized polyvinyl chloride (PVC), low density polyethylene (LDPE), thermoplastic rubber, ethylene-ethyl acrylate, ethylene-butylene copolymer, polybutylene and copolymers thereof, ethylene-propylene copolymers, chlorinated polypropylene, chlorinated polybutylene or mixtures of those.

Elastic fiber and web prepared from a blend of at least one elastomer (i.e., copolymers of an isoolefin and a conjugated polyolefin (e.g., copolymers of isobutylene and isoprene)) and at least one thermoplastic is disclosed in USP 4,874,447 (Hazelton et al.).

USP 4,657,802 (Morman) discloses composite nonwoven elastic webs and a process for their manufacture. The elastic materials useful for forming the fibrous nonwoven elastic web include polyester elastomeric materials, polyurethane elastomeric materials, and polyamide elastomeric materials.

USP 4,833,012 (Makimura et al.) discloses nonwoven entanglement fabrics made from a three dimensional entanglement of elastic fibers, nonshrinkable nonelastic fibers, and shrinkable elastic fibers. The elastic fibers are made from polymer diols, polyurethanes, polyester elastomers, polyamide elastomers and synthetic rubbers.

Composite elastomeric polyether block amide nonwoven webs are disclosed in USP 4,820,572 (Killian et aL). The webs are made using a melt blown process and the elastic fibers are made from a polyether block amide copolymer.

Another elastomeric fibrous web is disclosed in USP 4,803,117 (Daponte). Daponte discloses that the webs are made from elastomeric fibers or microfibers made from copolymers of ethylene and at least one vinyl monomer selected from the group including vinyl ester monomers, unsaturated aliphatic monocarboxylic acids and alkyl esters of these monocarboxylic acids. The amount of the vinyl monomer is said to be "sufficient" to impart elasticity to the melt-blown fibers. Blends of the ethylene/vinyl copolymers with other polymers (e.g., polypropylene or linear low density polyethylene) are also said to form the fibrous webs.

Fabricated articles, such as incontinence garments, also benefit from use of elastic components. For example, USP 4,940,464 (Van Gompel et al.), USP 4,938,757 (Van Gompel et al.), and USP 4,938,753 (Van Gompel et al.) disclose disposable garments containing elastic gathering means and stretchable side panels. The gathering means and stretchable side panels are made from melt blown or film of block or graft copolymers (e.g., butadiene, isoprene, styrene, ethylene-methyl acrylate, ethylene-vinyl acetate, ethylene-ethyl acrylate or blends thereof).

While previous efforts to make elastic fibers and fabrics from olefinic polymers have focused on polymer additives, these solutions have potential detriments, including the increased cost of the additives, and incompatibility, resulting in substandard spinning performance.

A subject of the present invention therefore is a bicomponent fiber comprising at least one component consisting essentially of at least one homogeneously branched linear ethylene polymer characterized as having:

a) a density of less than 0.90 g/cm$^3$,
b) a molecular weight distribution, $M_w/M_n$, from 1.5 to 2.5, and
c) a percent recovery of at least 50 percent.

During the investigational work leading to the present invention, we have discovered new elastic fibers and fabrics which do not need additives to be elastic. These new fibers and fabrics can be produced on conventional synthetic fiber or fabric processes (e.g., continuous wound filament, spun bond, and melt blown) and they can be used to produce highly elastic structures that can have recycle compatibility between elastic and non-elastic components. These fibers and fabrics are made from homogeneously branched linear ethylene polymers.

The elastic fiber has a permanent set of 50 percent or less, or, stated another way, a percent recovery of at least 50 percent. This property is surprisingly different than the response of fibers made from heterogeneously branched linear low density polyethylene where the percent permanent set seems to be generally greater than 50 percent and substantially independent of density. The fiber is made from at least one homogeneously branched linear ethylene polymer having a density less than 0.90 g/cm$^3$ and a molecular weight distribution, $M_w/M_n$, of from 15 to 2.5. The new elastic fabric comprises such elastic fibers.

The homogeneously branched linear ethylene polymers useful herein to make the elastic fibers and fabrics are a known class of polymers which have a linear polymer backbone, no long chain branching and a narrow molecular weight distribution. Such polymers are interpolymers of ethylene and at least one $\alpha$-olefin comonomer of from 3 to 20 carbon atoms, and are preferably copolymers of ethylene with a $C_3$-$C_{20}$ $\alpha$-olefin, and are most preferably copolymers of ethylene with 1-butene, 1-hexene, 4-methyl-1-pentene or 1-octene. This class of polymers is disclosed, for example, by Elston in USP 3,645,992 and subsequent processes to produce such polymers using metallocene catalysts have been developed, as shown, for example, in EP 0 129 368, EP 0 260 999, USP 4701432, USP 4937301, USP 4935397, USP 5055438, and WO 90/07526, and others. The polymers can be made by conventional polymerization processes (e.g., gas phase, slurry, solution, and high pressure).

The linear ethylene polymers used to form the elastic fibers have homogeneous branching distributions. The terms "homogeneously branching distribution" and "homogeneously branched" means that the comonomer is randomly distributed within a given molecule and that substantially all of the copolymer molecules have the same ethylene/comonomer ratio. The homogeneity of the branching distribution can be measured variously, including measuring the SCBDI (Short Chain Branch Distribution Index) or CDBI (Composition Distribution Branch Index). SCBDI or CDBI is defined as the weight percent of the polymer molecules having a comonomer content within 50 percent of the median total molar comonomer content. The CDBI of a polymer is readily calculated from data obtained from techniques known in the art, such as, for example, temperature rising elution fractionation (abbreviated herein as "TREF") as described, for example, in Wild et al, Journal of Polymer Science, Poly. Phys. Ed., Vol. 20, p. 441 (1982), or in U.S. Patent 4,798,081. The SCBDI or CDBI for the homogeneously branched polymers used in the present invention is preferably greater than 30 percent, especially greater than 50 percent.

The homogeneously branched linear ethylene polymers used to make the elastic fibers have a single melting peak, as measured using differential scanning calorimetry (DSC), in contrast to heterogeneously branched linear ethylene polymers, which have 2 or more melting peaks, due to their broad branching distribution.

The density of the homogeneously branched linear ethylene polymers used to make the elastic fibers is measured in accordance with ASTM D-792 and is generally less than 0.90 g/cm$^3$, preferably from 0.85 g/cm$^3$ to 0.90 g/cm$^3$, more preferably from 0.85 g/cm$^3$ to 0.89 g/cm$^3$, and especially from 0.85 g/cm$^3$ to 0.88 g/cm$^3$.

The molecular weight of the homogeneously branched linear ethylene polymers used to make the elastic fibers is conveniently indicated using a melt index measurement according to ASTM D-1238, Condition 190°C/2.16 kg (formally known as "Condition (E)" and also known as I$_2$). Melt index is inversely proportional to the molecular weight of the polymer. Thus, the higher the molecular weight, the lower the melt index, although the relationship is not linear. The melt index for the homogeneously branched linear ethylene polymers used to make the elastic fibers used herein is generally from 0.01 grams/10 minutes (g/10 min) to 1000 g/10 min, preferably from 0.1 g/10 min to 5 g/10 min for monofilament (fibers generally above about 1.6 tex/filament (15 denier/filament)), and preferably from 5 g/10 min to 250 g/10 min for fine denier fibers (fibers having a diameter generally less than or equal to 1.6 tex/filament (15 denier/filament)).

Another measurement useful in characterizing the molecular weight of the homogeneously branched linear ethylene polymers used to make the elastic fibers is conveniently indicated using a melt index measurement according to ASTM D-1238, Condition 190°C/10 kg (formally known as "Condition (N)" and also known as I$_{10}$). The ratio of these two melt index terms is the melt flow ratio and is designated as $I_{10}/I_2$. Generally, the $I_{10}/I_2$ ratio of the homogeneously branched linear ethylene polymers is 6 or less.

Additives such as antioxidants (e.g., hindered phenolics (e.g., Irganox® 1010 made by Ciba-Geigy Corp.), phosphites (e.g., Irgafos® 168 made by Ciba-Geigy Corp.)), cling additives (e.g., polyisobutylene (PIB)), antiblock additives, pigments can also be included in the homogeneously branched linear ethylene polymers used to make the elastic fibers, to the extent that they do not interfere with the enhanced fiber and fabric properties discovered by Applicants.

Molecular Weight Distribution Determination

The molecular weight distribution ($M_w/M_n$) of the homogeneously branched ethylene interpolymers are analyzed by gel permeation chromatography (GPC) on a Waters 150C high temperature chromatographic unit equipped with three mixed porosity columns (Polymer Laboratories $10^3$, $10^4$, $10^5$, and $10^6$), operating at a system temperature of 140°C. The solvent is 1,2,4-trichlorobenzene, from which 0.3 percent by weight solutions of the samples are prepared for injection. The flow rate is 1.0 milliliters/minute and the injection size is 200 microliters.

The molecular weight determination is deduced by using narrow molecular weight distribution polystyrene standards (from Polymer Laboratories) in conjunction with their elution volumes. The equivalent polyethylene molecular weights are determined by using appropriate Mark-Houwink coefficients for polyethylene and polystyrene (as described by Williams and Word in Journal of Polymer Science, Polymer Letters, Vol. 6, (621) 1968, incorporated herein by reference) to derive the following equation:

$$M_{polyethylene} = a * (M_{polystyrene})^b.$$

In this equation, a = 0.4316 and b = 1.0. Weight average molecular weight, $M_w$, is calculated in the usual manner according to the following formula: $M_w = R w_i^* M_i$, where $w_i$ and $M_i$ are the weight fraction and molecular weight, respectively, of the $i^{th}$ fraction eluting from the GPC column.

The $M_w/M_n$ of the homogeneously branched linear ethylene polymers is generally from 1.5 to 2.5.

The term "homogeneously branched linear ethylene polymers" as used herein does not include, by definition, the traditional heterogeneously branched linear low density polyethylenes of linear high density polyethylenes made using Ziegler polymerization processes (e.g., USP 4,076,698 (Anderson et aL)) or the linear homogeneously branched polymers described by Elston (USP 4,645,992) which have a density of 0.915 g/cm$^3$ or higher, or the branched high pressure polyethylenes and other high pressure ethylene copolymers (e.g., ethylene/vinyl acetate or ethylene/vinyl alcohol copolymers) which are known to those skilled in the art to have numerous long chain branches.

Fibers and/or Fabric

Bicomponent fibers according to the invention are made from the homogeneously branched linear ethylene polymers. Such bicomponent fibers have the homogeneously branched linear ethylene polymer in at least one portion of the fiber. For example, in a sheath/core bicomponent fiber (i.e., one in which the sheath concentrically surrounds the core), the homogeneously branched linear ethylene polymer can be in either the sheath or the core. Different homogeneously branched linear ethylene polymers can also be used independently as the sheath and the core in the same fiber preferably where both components are elastic and especially where the sheath component has a lower melting point than the core component. Other types of bicomponent fibers are within the scope of the invention as well, and include such structures as side-by-side fibers (e.g., fibers having separate regions of polymers, wherein the homogeneously branched linear ethylene polymer comprises at least a portion of the fiber's surface).

The bicomponent fibers claimed herein may be elastic. The term "elastic" means that the fiber will recover at least 50 percent of its stretched length after the first pull and after the fourth pull to 100 percent strain (doubled the length). Elasticity can also be described by the "permanent set" of the fiber. Permanent set is the converse of elasticity. A fiber is stretched to a certain point and subsequently released to the original position before stretch, and then stretched again. The point at which the fiber begins to pull a load is designated as the percent permanent set.

For the homogeneously branched linear ethylene polymers used herein, the percent permanent set correlates with the density of the polymer selected. Generally, the lower the density, the lower the permanent set. For fibers made from a homogeneously branched linear ethylene/$\alpha$-olefin polymer having a density less than 0.90 g/cm$^3$, the percent permanent set is less than or equal to 50 percent (i.e., the recovery is at least 50 percent).

For the novel elastic fibers disclosed herein, the melt index can be widely varied, with surprisingly little impact upon the fibers' elasticity. This allows more design flexibility for fabrics and finished articles because the strength and retractive force of the fibers and fabrics can be changed independently of the elasticity. For example, the retractive force of a fiber can be changed by changing the polymer melt index (decreasing the melt index increases the retractive force), rather than the fiber diameter, thus permitting a better optimization of fabric "hand" (i.e., feel) with the necessary elastic/strength fabric performance.

The shape of the fiber is not limited. For example, typical fiber have a circular cross sectional shape, but sometimes fibers have different shapes, such as a trilobal shape, or a flat (i.e., "ribbon" like) shape. The bicomponent fiber disclosed herein is not limited by the shape of the fiber.

Fiber diameter can be measured and reported in a variety of fashions. Generally, fiber diameter is measured in denier per filament. Denier is a textile term which is defined as the grams of the fiber per 9000 meters of that fiber's length (1 denier =1/9 tex; 1 tex = $10^{-6}$ kg·m$^{-1}$). Monofilament generally refers to an extruded strand having a denier per filament greater than 15 (tex per filament greater than 1.7), usually greater than 30 ( 3.3). Fine denier fiber generally refers to fiber having a denier of about 15 or less. Microdenier (aka microfiber) generally refers to fiber having a diameter not greater than about 100 micrometers. For the novel elastic fibers disclosed herein, the diameter can be widely varied, with little impact upon the fiber's elasticity. However, the fiber denier can be adjusted to suit the capabilities of the finished article and as such, would preferably be: from 0.5 to 30 denier/filament (0.06 to 3.3 tex/filament) for melt blown; from 1 to 30 denier/filament (1/9 to 3.3 tex/filament) for spunbond; and from 1 to 20,000 denier/filament ( 1/9 to 2222.2 tex/filament) for continuous wound filament.

Fabrics made from the novel bicomponent fibers include both woven and nonwoven fabrics. Nonwoven fabrics can be made variously, including spunlaced (or hydrodynamically entangled) fabrics as disclosed in USP 3,485,706 (Evans) and USP 4,939,016 (Radwanski et al.); by carding and thermally bonding staple fibers; by spunbonding continuous fibers in one continuous operation; or by melt blowing fibers into fabric and subsequently calandering or thermally bonding the resultant web. These various nonwoven fabric manufacturing techniques are well known to those skilled in the art and the disclosure is not limited to any particular method. Other structures made from such fibers are also included within the scope of the invention, including e.g., blends of these novel fibers with other fibers (e.g., poly (ethylene terephthalate) (PET) or cotton).

As used in the claims herein, the term "consisting essentially of" means that both the homogeneously branched linear ethylene/α-olefin polymers used to make the fibers and fabrics can have additional materials which do not materially affect the elasticity of the fibers or fabric. Such useful nonlimiting additive materials include pigments, antioxidants, stabilizers, surfactants (e.g., as disclosed in USP 4,486,552 (Niemann), USP 4,578,414 (Sawyer et al.) or USP 4,835,194 (Bright et al.)).

Fabricated Articles

Fabricated articles which can be made using the novel bicomponent fibers and fabrics disclosed herein, for embodiments where the bicomponent fiber is elastic, include composite fabric articles (e.g., diapers) that desire elastic portions. For example, elastic portions are desired in diaper waist band portions to prevent the diaper from falling and leg band portions to prevent leakage (as shown in USP 4,381,781 (Sciaraffa)). Often, the elastic portions promote better form fitting and/or fastening systems for a good combination of comfort and reliability. The novel bicomponent fibers and fabrics disclosed herein can also produce structures which combine elasticity with breathability.

The novel bicomponent fibers and fabrics disclosed herein can also be used in various structures as described in USP 2,957,512 (Wade). For example, layer 50 of the structure described in USP '512 (i.e., the elastic component) can be replaced with the novel bicomponent fibers and fabrics, especially where flat, pleated, creped, etc., non-elastic materials are made into elastic structures. Attachment of the novel bicomponent fibers and/or fabric to non-elastic fibers, fabrics or other structures can be done with melt bonding or with adhesives. Gathered or shirred elastic structures can be produced from the new bicomponent fibers and/or fabrics and non-elastic components by pleating the non-elastic component (as described in USP '512) prior to attachment, prestretching the elastic component prior to attachment, or heat shrinking the elastic component after attachment.

The novel bicomponent fibers described herein also can be used in a spunlaced (or hydrodynamically entangled) process to make novel structures. For example, USP 4,801,482 (Goggans) discloses an elastic sheet (12) which can now be made with the novel bicomponent fibers/fabric described herein.

Continuous bicomponent filaments as described herein could also be used in woven applications where high resilience is desired.

The novel bicomponent fibers and fabrics disclosed herein also have adjustable tenacity and retractive force, which enables design flexibility for variable retractive force in the same garment, if needed, i as described for example in USP 5,196,000 (Clear et al.).

USP 5,037,416 (Allen et al.) describes the advantages of a form fitting top sheet by using elastic ribbons (see member 19 of USP' 416). The novel bicomponent fibers could serve the function of member 19 of USP '416, or could be used in fabric form to provide the desired elasticity.

Composites that utilize very high molecular weight linear polyethylene or copolymer polyethylene also benefit from the novel bicomponent fibers disclosed herein. For example, the bicomponent fibers have a low melting point (with the melting point of the polymer essentially linearly related to the polymer density), such that in a blend of novel bicomponent fibers and very high molecular weight polyethylene fibers (e.g., Spectra™ fibers made by Allied Chemical) as described in USP 4,584,347 (Harpell et al.), the lower melting elastic fibers bond the high molecular weight polyethylene fibers without melting the high molecular weight fibers, thus preserving the high strength and integrity of the high molecular weight fiber.

In USP 4,584,347 it is described that the weight average molecular weight of polyethylene used is at least 500,000 (6 IV), preferably at least 1,000,000 (10 IV), and more preferably between 2,000,000 (16 IV) and 8,000,000 (42 IV). The weight average molecular weight of polypropylene used is at least 750,000 (5 IV), preferably at least 1,000,000 (6 IV), more preferably at least 1,500,000 (9 IV) and most preferably between 2,000,000 (11 IV) and 8,000,000 (33 IV). The IV numbers represent intrinsic viscosity of the polymer in decalin at 135°C.

In USP 4,981,747 (Morman), the novel bicomponent fibers and/or fabrics disclosed herein can be substituted for elastic sheet 122, which forms a composite elastic material including a reversibly necked material.

The new bicomponent fibers can also be a melt blown elastic component, as described in reference 6 of the drawings of USP 4,879,170 (Radwanski). USP '170 generally describes elastic coform material and manufacturing processes.

Elastic panels can also be made from the novel bicomponent fibers and fabrics disclosed herein, and can be used, for example, as members 18,20,14, and/or 26 of USP 4,940,464 (Van Gompel). The novel bicomponent fibers and fabrics described herein can also be used as elastic components of composite side panels (e.g., layer 86 of USP '464).

Experimental

Fibers were produced by extruding the polymer using a one inch (2.54 cm) diameter extruder which feeds a gear pump. The gear pump pushed the material through a spin pack containing a 40 micrometer (average pore size) sintered flat metal filter and a 34 hole spinneret. The spinneret holes had a diameter of 400 micrometers and a land length (i.e, length/diameter or L/D) of 4/1. The gear pump was operated such that about 0.39 grams of polymer were extruded through each hole of the spinneret per minute. Melt temperature of the polymer was typically about 204°C, but varied depending upon the molecular weight of the polymer being spun. Generally the higher the molecular weight, the higher the melt temperature. Quench air (slightly above room temperature (about 25°C) was used to help the melt spun fibers cool. The quench air was located just below the spinneret and blew air across the fiber line as it was extruded. The quench air flow rate was low enough so that it could barely be felt by hand in the fiber area below the spinneret. The fibers were collected on a godet roll having a diameter of about 6 inches (15.24 cm). The godet roll speed was adjustable, but for the experiments demonstrated herein, the godet speed was about 1500 revolutions/minute. The godet roll was located about 3 meters below the spinneret die.

Fibers were tested on an Instron tensile testing device equipped with a small plastic jaw on the cross-head (the jaw has a weight of about six gms) and a 500 gram load cell. The jaws were set 1 inch (2.54 cm) apart. The cross head speed was set at 5 inches/minute (12.7 cm/minute). A single fiber was loaded into the Instron jaws for testing. The fiber was then stretched to 100 percent of strain (i.e., it was stretched another 1 inch (2.54 cm)), where the tenacity was recorded. The fiber was allowed to return to the original Instron setting (where the jaws were again 1 inch (2.54 cm) apart) and the fiber was again pulled. At the point where the fiber began to provide stress resistance, the strain was recorded and the percent permanent set was calculated. In one example, a fiber pulled for the second time did not provide stress resistance (i.e., pull a load) until it had traveled 0.1 inches (0.25 cm). Thus, the percent permanent set was calculated as 10 percent, i.e., the percent of strain at which the fiber begins to provide stress resistance. The numerical difference between the percent permanent set and 100 percent is known as the percent elastic recovery. Thus, a fiber having a permanent set of 10 percent will have a 90 percent elastic recovery. After recording percent permanent set, the fiber was pulled to 100 percent strain and the tenacity recorded. The fiber pulling process was repeated several times, with the percent permanent set recorded each time and the 100 percent strain tenacity recorded as well. Finally, the fiber was pulled to its breaking point and the ultimate breaking tenacity and elongation were recorded.

Examples 1 and 2 and Comparative Examples 3-12

Examples 1 and 2 are provided to convey technical information but do not fall within the scope of the present claims.

Example 1 was made from a homogeneously branched ethylene/butene copolymer trademarked TAFMER™ A20090, which is made by Mitsui Petrochemical.

Example 2 was made from a homogeneously branched ethylene/butene copolymer trademarked EXACT™ 4023, which is made by Exxon Chemical Corporation.

Table 1 summarizes percent permanent set data for melt spun (i.e., no further mechanical drawing) fiber for Examples 1 and 2. The percent permanent set was obtained by pulling each fiber to 100 percent strain five times, at which point the percent permanent set was recorded as described earlier in this disclosure.

Table 1

| Ex. | $I_2$ (g/10 min) | Density (g/cm$^3$) | $I_{10}/I_2$ | Denier (avg.) [tex] | $M_w/M_n$ | Perm. Set* (percent) | Perm. Set** (percent) |
|---|---|---|---|---|---|---|---|
| 1 | 18 | 0.895 | 5 | [0.57] 5.1 | 1.80 | 36 | 49 |
| 2 | 35 | 0.882 | 5.6 | [0.57] 5.1 | 2.05 | 13 | 19 |

*After the 1st pull

**After the 4th pull
NM = Not Measured

Examples 1 and 2 were easily made into fiber and had less permanent set (more resiliency) than comparable examples 3-7. The lower density example 2 had elastic properties rivaling that of comparative examples 8-11, which are currently used commercially, either alone or in combination with traditional non-elastic polymers (e.g., polypropylene or heterogeneously branched linear ethylene polymers).

Comparative Examples 3-7 are fibers melt spun from conventional heterogeneously branched ethylene/1-octene polymers (such as DOWLEX® polyethylene and ASPUN® Fiber Grade Resins, both made by The Dow Chemical Company).

Comparative Example 8 is a set of rubber fibers/strips made by JPS Corp.

Comparative example 9 is Lycra™ fiber (made by DuPont).

Comparative examples 10, 11 and 12 are elastic components from Huggies™ Pull Ups diapers (made by Kimberly Clark Corp.). After the polypropylene fabric was stripped off of the elastic side panel, a set of thin strips were cut from the elastic side panels of the diapers and tested as comparable example 10 to simulate performance of individual fibers.

The elastic fibers from the waist band of the diapers were identified as polyurethane (by infrared) and were tested as comparative example 11.

Fabric cut from the stripped elastic side panel is designated comparative example 12 and had a basis weight of about 0.64-0.69 grams/square inch (0.10-0.11 g/cm$^2$). Comparative example 12 was tested in accordance with the method used for testing the fibers (but by using a one inch (2.54 cm) by one inch (2.54 cm) square piece of fabric) and had a percent permanent set of about 2 percent after the first pull and a percent permanent set of about 3 percent after the fourth pull.

Table 2 summarizes data obtained for fiber of Comparative Examples 3-11:

Table 2

| Comp. Ex. | $I_2$ (g/10 min) | Density (g/cm$^3$) | $I_{10}/I_2$ | Denier (avg.) [tex] | $M_w/M_n$ | Perm. Set* (percent) | Perm. Set** (percent) |
|---|---|---|---|---|---|---|---|
| 3 | 17 | 0.95 | 6.5 | [0.53] 4.8 | 2.63 | 61 | 70 |
| 4 | 34 | 0.9406 | 6.6 | [0.5] 4.5 | 2.71 | 53 | 61 |
| 5 | 18 | 0.93 | 7 | [0.59] 5.3 | 2.73 | 53 | 62 |
| 6 | 6 | 0.9124 | 7.6 | [0.47] 4.2 | 3.47 | 54 | 64 |
| 7 | 3.8 | 0.8904 | 8.8 | [0.53] 4.8 | 3.7 | 62 | 70 |
| | | | | | | | |
| 8 | NA | NA | NA | [233.3] 2100 | NA | 5 | 8 |
| 9 | NA | NA | NA | [211.1] 1900 | NA | 5 | 5 |
| 10 | NA | NA | NA | NM | NA | 2 | 4 |

*After the 1st pull

**After the 4th pull
NA = Not Applicable
NM = Not Measured

Table 2 (continued)

| Comp. Ex. | $I_2$ (g/10 min) | Density (g/cm$^3$) | $I_{10}/I_2$ | Denier (avg.) [tex] | $M_w/M_n$ | Perm. Set[*] (percent) | Perm. Set[**] (percent) |
|---|---|---|---|---|---|---|---|
| 11 | NA | NA | NA | [111.1] 1000 | NA | 4 | 9 |

*After the 1st pull
**After the 4th pull
NA = Not Applicable
NM = Not Measured

## Claims

1. A bicomponent fiber comprising at least one component consisting essentially of at least one homogeneously branched linear ethylene polymer characterized as having:

    a) a density of less than 0.90 g/cm$^3$,
    b) a molecular weight distribution, $M_w/M_n$, from 1.5 to 2.5, and
    c) a percent recovery of at least 50 percent.

2. The bicomponent fiber of Claim 1, wherein the homogeneously branched linear ethylene polymer is a copolymer of ethylene with a $C_3$-$C_{20}$ $\alpha$-olefin.

3. The bicomponent fiber of either of Claims 1 or 2, wherein the homogeneously branched linear ethylene polymer is a copolymer of ethylene with 1-butene, 1-hexene, 4-methyl-1-pentene, or 1-octene.

4. The bicomponent fiber of any of the preceding Claims, wherein the homogeneously branched linear ethylene polymer is characterized as having a density of from 0.85 to 0.89 g/cm$^3$.

5. The bicomponent fiber of any of the preceding Claims, further characterized as being a sheath/core bicomponent fiber or a side-by-side bicomponent fiber.

6. The bicomponent fiber of Claim 5, further characterized as being a sheath/core bicomponent fiber, wherein the at least one homogeneously branched linear ethylene polymer is present in the core or the sheath of the bicomponent fiber.

7. The bicomponent fiber of any of the preceding Claims, characterized as having a circular, trilobal, or flat cross sectional shape.

8. The bicomponent fiber of any of the preceding Claims, characterized as being a monofilament fiber, fine denier fiber, or microdenier fiber.

9. A woven article comprising the bicomponent fiber of any of the preceding claims.

10. A nonwoven article comprising the bicomponent fiber of any of the preceding claims.

11. The nonwoven article of Claim 10, wherein the bicomponent fiber is blended with another fiber.

12. The nonwoven article of Claim 10, wherein the bicomponent fiber is blended with poly(ethylene terephthalate) or cotton fibers.

## Patentansprüche

1. Bikomponentenfaser umfassend mindestens eine Komponente, die im wesentlichen aus mindestens einem homogen verzweigten linearen Ethylenpolymer zusammengesetzt ist, **dadurch gekennzeichnet, dass** sie

    a) eine Dichte von weniger als 0,90 g/cm$^3$,

b) eine Molekulargewichtsverteilung $M_w/M_n$ von 1,5 bis 2,5 und

c) eine prozentuale Rückverformung von mindestens 50 % aufweist.

**2.** Bikomponentfaser nach Anspruch 1,

wobei das homogen verzweigte lineare Ethylenpolymer ein Copolymer von Ethylen mit einem $C_3$-$C_{20}\alpha$-Olefin ist.

**3.** Bikomponentfaser nach einem der Ansprüche 1 oder 2,

wobei das homogen verzweigte lineare Ethylenpolymer ein Copolymer von Ethylen mit 1- Buten, 1-Hexen, 4-Methyl-1-penten oder 1-Okten ist.

**4.** Bikomponentfaser nach einem der vorhergehenden Ansprüche,

wobei das homogen verzweigte lineare Ethylenpolymer **dadurch gekennzeichnet ist, dass** es eine Dichte von 0,85 bis 0,89 g/cm$^3$ aufweist.

**5.** Bikomponentfaser nach einem der vorhergehenden Ansprüche, ferner

**dadurch gekennzeichnet, dass**

es sich um eine Mantel/Kern-Bikomponentfaser oder eine Seite-an-Seite-Bikomponentfaser handelt.

**6.** Bikomponentfaser nach Anspruch 5, ferner **dadurch gekennzeichnet, dass**

es eine Mantel/Kern-Bikomponentfaser ist, wobei

das mindestens eine homogen verzweigte lineare Ethlyenpolymer sich im Kern oder im Mantel der Bikomponentfaser befindet.

**7.** Bikomponentfaser nach einem der vorhergehenden Ansprüche,

**dadurch gekennzeichnet, dass**

sie eine kreisförmige, trilobale oder flache Querschnittsflächenform aufweist.

**8.** Bikomponentfaser nach einem der vorhergehenden Ansprüche,

**dadurch gekennzeichnet, dass**

es sich um eine Monofilament-Faser, feindenier Faser oder microdenier Faser handelt.

**9.** Gewebter Gegenstand, der die Bikomponentfaser eines der vorhergehenden Ansprüche umfasst.

**10.** Nichtgewebter Gegenstand, der die Bikomponentfaser eines der vorhergehenden Ansprüche umfasst.

**11.** Nichtgewebter Gegenstand nach Anspruch 10,

wobei die Bikomponentfaser mit einer anderen Faser gemischt ist.

**12.** Nichtgewebter Gegenstand nach Anspruch 10,

wobei die Bikomponentfaser mit Poly(ethylenterephthalat)- oder Baumwollfasern gemischt ist.

**Revendications**

**1.** Fibre bicomposant comprenant au moins un composant constitué essentiellement d'au moins un polymère d'éthylène linéaire branché de manière homogène **caractérisé par** :

a) une densité inférieure à 0,90 g/cm$^3$,

b) une distribution du poids moléculaire $M_w/M_n$, comprise entre 1,5 et 2,5, et

c) une recouvrance en pourcentage d'au moins 50%.

**2.** Fibre bicomposant selon la revendication 1, dans laquelle le polymère d'éthylène linéaire branché de manière homogène est un copolymère d'éthylène avec une $\alpha$-oléfine en $C_3$-$C_{20}$.

**3.** Fibre bicomposant selon la revendication 1 ou 2, dans laquelle le polymère d'éthylène linéaire branché de manière homogène est un copolymère d'éthylène avec le 1-butène, le 1-hexène, le 4-méthyl-1-pentène, ou le 1-octène.

**4.** Fibre bicomposant selon l'une quelconque des revendications précédentes, dans laquelle le polymère d'éthylène linéaire branché de manière homogène est **caractérisé par** une densité comprise entre 0,85 et 0,89 g/cm$^3$.

5. Fibre bicomposant selon l'une quelconque des revendications précédentes, caractérisée en outre comme étant une fibre bicomposant de type gaine/noyau ou une fibre bicomposant à composants juxtaposés.

6. Fibre bicomposant selon la revendication 5, caractérisée en outre comme étant une fibre bicomposant de type gaine/noyau, dans laquelle le polymère d'éthylène linéaire branché de manière homogène est présent dans le noyau ou la gaine de la fibre bicomposant.

7. Fibre bicomposant selon l'une quelconque des revendications précédentes, **caractérisée par** une section de forme circulaire, trilobée ou en forme de croix.

8. Fibre bicomposant selon l'une quelconque des revendications précédentes, caractérisée comme étant une fibre monofilament, une fibre fin denier, ou une fibre microdenier.

9. Article tissé comprenant une fibre bicomposant selon l'une quelconque des revendications précédentes.

10. Article non tissé comprenant une fibre bicomposant selon l'une quelconque des revendications précédentes.

11. Article non tissé selon la revendication 10, dans lequel la fibre bicomposant est mélangée à une autre fibre.

12. Article non tissé selon la revendication 10, dans lequel la fibre bicomposant est mélangée à du poly(téréphtalate d'éthylène) ou à des fibres de coton.